Europäisches Patentamt

European Patent Office

Office européen des brevets

(19)

(11) Veröffentlichungsnummer: **0 151 274**
**B1**

(12) **EUROPÄISCHE PATENTSCHRIFT**

(45) Veröffentlichungstag der Patentschrift: **05.09.90**

(21) Anmeldenummer: **84115160.8**

(22) Anmeldetag: **11.12.84**

(51) Int. Cl.⁵: **G 06 F 15/72**

(54) **Verfahren zum Darstellen von Gegenstaenden.**

(30) Priorität: **03.02.84 DE 3403678**

(43) Veröffentlichungstag der Anmeldung:
**14.08.85 Patentblatt 85/33**

(45) Bekanntmachung des Hinweises auf die
Patenterteilung:
**05.09.90 Patentblatt 90/36**

(84) Benannte Vertragsstaaten:
**AT CH DE FR GB IT LI NL SE**

(56) Entgegenhaltungen:
**IBM TECHNICAL DISCLOSURE BULLETIN, Band
20, Nr. 7, Dezember 1977, Seiten 2917-2920,
New York, US; A. APPEL et al.: "Hidden line
elimination for semi-convex slices"**

**A.F.I.P.S. JOINT COMPUTER CONFERENCE
1977, Dallas, 13.-16. Juni 1977, Proceedings,
Band 46, Seiten 39-48, AFIPS, Montvale, US;
J.R. WARNER: "MIDAS - A compositional
modeling system"**

(73) Patentinhaber: **Dr. Johannes Heidenhain GmbH
Dr.-Johannes-Heidenhain-Strasse 5 Postfach
1260
D-8225 Traunreut (DE)**

(72) Erfinder: **Huber, Josef
Andreasstrasse 1
D-8261 Engelsberg (DE)**

Courier Press, Leamington Spa, England.

## Beschreibung

Die Erfindung bezieht sich auf eine numerische Steuerung für eine Werkzeugmaschine gemäß dem Oberbegriff des Anspruches 1.

Aus der DE—OS 27 38 441 ist es bekannt, einen Gegenstand durch eine Serie von Schnitten zu zerlegen und durch Berechnungen räumlich zugeordnete Ansichten zu erzeugen, wobei verdeckt liegende Randlinien der Schnitte rechnerisch eliminiert sind. Die räumlichen Ansichten werden dabei mit einer stereoskopischen Einrichtung betrachtet. Über den Algorithmus für die rechnerische Eliminierung der verdeckten Kanten wird dort keine Angabe gemacht.

Aus der Technologique des Computer Aided Design (CAD) ist es bekannt, Gegenstände perspektivisch so darzustellen, daß verdeckte Kanten nicht sichtbar sind. Als Beispiel sei auf die Druckschrift: IBM Technical Disclosure Bulletin Vol. 20 No. 7 December 1977"Hidden Line Elimination for Semi-convex Slices" verwiesen.

Für diese Darstellungsweise ist jedoch bekanntermaßen ein hoher apparativer und rechnerischer Aufwand erforderlich.

Somit ist aus dem Stand der Technik keine numerische Steuerung bekannt, mit der auf einfache Weise, z.B. am Bildschirm einer NC-gesteuerten Werkzeugmaschine ein dreidimensionaler Gegenstand so dargestellt werden kann, daß verdeckte Kanten nicht sichtbar sind, denn aus der EP—A2—0 083 836 ist auch nur bekannt, daß bei einer numerisch gesteuerten Werkzeugmaschine der Werkzeugweg angezeigt wird. Der dazu erforderliche apparative Aufwand ist vergleichsweise gering.

Der Erfindung liegt die Aufgabe zugrunde, eine numerische Steuerung für eine Werkzeugmaschine zu schaffen, die mit geringem Aufwand ermöglicht, perspektivische Darstellungen von zu bearbeitenden Werkstücken zu erzeugen, bei denen verdeckt liegende Kanten nicht gezeigt werden, so daß ein klarer räumlicher Eindruck des Gegenstandes erzielt wird.

Diese Aufgabe wird durch die im Patentanspruch angegebene numerische Steuerung gelöst.

Die Vorteile der numerischen Steuerung liegen in der einfachen Auswertung der im Rechner gespeicherten Daten des Gegenstandes und daraus abgeleitet in der Schnelligkeit, die zur perspektivischen Darstellung des Gegenstandes führt.

Mit Hilfe eines Beispiels soll die Efindung anhand der Zeichnungen näher erläutert werden. Es zeigen

Figur 1 Die Vorderansicht eines Werkstückes, daß am Bildschirm dargestellt werden soll,

Figur 2 die Draufsicht auf das Werkstück gemäß Figur 1 mit Schnittkennzeichnung,

Figur 3 ein perspektivisches Bild, wie es der Darstellung am Bildschirm entspricht und

Figur 4 ein Schnittbeispiel.

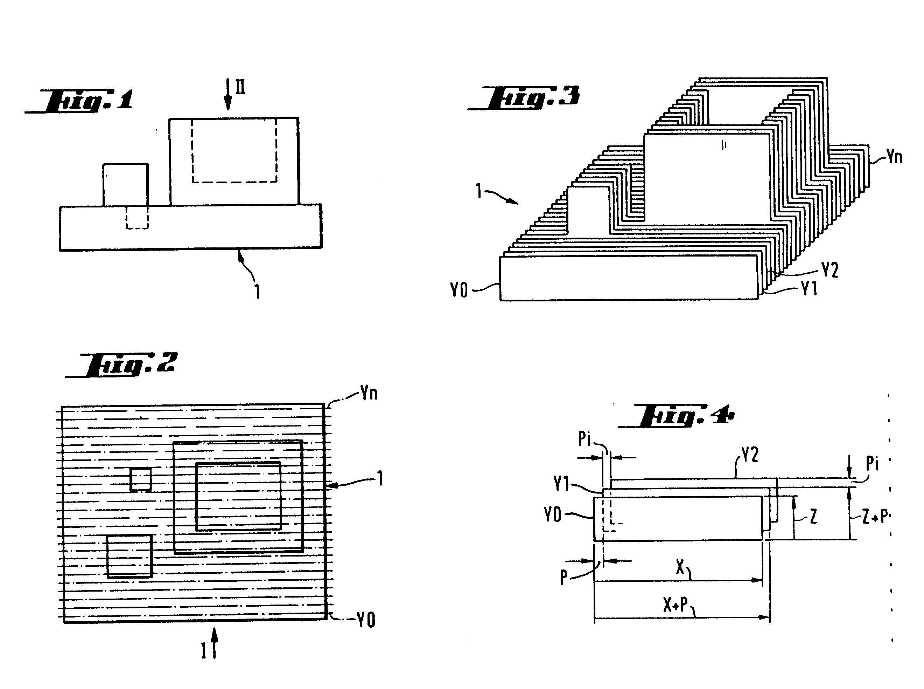

In der Figur 1 ist ein Werkstück 1 abgebildet, wie es in technischen Zeichnungen dargestellt wird. Alle sichtbaren Kanten sind gemäß der genormten Vorschriften für technische Zeichnungen mit vollen, durchgehenden Linien gezeichnet. Alle Kanten, die in dieser Vorderansicht nicht sichtbar wären, sind durch dünnere, unterbrochene Linien gezeichnet, wie es ebenfalls durch die Zeichnungsvorschriften bestimmt ist.

Das abgebildete Werkstück 1 stellt einen Gegenstand dar, der auf einer numerisch gesteuerten Werkzeugmaschine hergestellt werden soll. Um dieses Werkstück 1 aus einem Rohling herstellen zu könne, muß in bekannter Weise ein Programm für die NC-Maschinen erstellt werden. Das Programm wird anhand einer technischen Zeichnung des fertigen Werkstückes 1 in Form von Programmdaten und -befehlen in die NC-Steuerung eingespeist.

Un Programmierfehler ohne Fertigung von Ausschußwerkstücken herausfinden zu können, soll das Werkstück 1, wie es gemäß Programm aus dem Rohling entstehen würde, am Bildschirm der NC-Steuerung der Werkzeugmaschine dargestellt werden. Am eindrucksvollsten geschieht das durch eine perspektivische Darstellung, ohne verdeckt liegende Kanten zu zeigen.

Diese Darstellung erfolgt vorteilhaft in der Weise, daß das Werkstück 1 in eine Serie von Schnitten "zerlegt" wird, die perspektivisch versetzt angezeigt werden.

In Figur 2 ist anhand der Werkstückdraufsicht gezeigt, wie die parallelen Schnitte Yo bis Yn verlaufen. Durch jeden dieser Schnitte Yo bis Yn entsteht eine Schnittebene, deren Fläche dem Querschnitt des Werkstückes 1 in der jeweiligen Schnittebene entspricht. Die Kontur jeder dieser Flächen ist ein Polygon, dessen Koordinaten im Speicher der Steuerung in Form von Daten abgelegt sind.

Figur 3 zeigt das fertig aufgebaute Bild des Werkstückes 1, wie es der perspektivischen Bildschirmdarstellung entspräche.

Der Bildaufbau erfolgt sukzessive, indem die Daten des ersten Polygons—die der ersten Schnittebene Yo entsprechen—aus dem Speicher entnommen und einem Grafikprozessor zugeführt werden, der die Anzeige am Bildschirm veranlaßt.

Durch die Koordinate Yo ist festgelegt, daß dieses Polygon sich in der Yo-Ebene befindet. Die weiteren Daten geben die Ausdehnung des Polygons in X-Richtung—also die Breite—, sowie die Ausdehnung in Z-Richtung—also die Höhe—an. Der Betrag für die Höhe kann sich dabei in einem Bereich von der maximalen Rohlingshöhe bis zur Höhe "Null" befinden, well alles Matwcial des Rohlings an dieser Stelle abgetragen wurde.

Die Darstellung des Polygons der nächsten Schnittebene erfolgt bei der Koordinate Y1. Das Polygon an der Schnittebene Y1 soll perspektivisch versetzt dargestellt werden, um den Bild des Gegenstandes einen räumlichen Eindruck zu verleihen.

Da aber verdeckt liegende Kanten nicht angezeigt werden sollen, muß das Polygon der neuen Schnittebene Y1 daraufhin überprüft werden, ob unter Berücksichtigung des perspektivischen Versatzes irgendein Bereich der Kontur des neuen Y1-Polygons über die Kontur des Yo-Polygones herausragt. Nur wenn die Kontur des aktuellen Polygons eine der Konturen der bereits dargestellten Polygone überragt, wird dieser Bereich auch dargestellt. So ist sichergestellt, daß Kanten eines nachfolgend·darzustellenden Polygons nur angezeigt werden, wenn sie zumindest eine der bereits abgebildeten Schnittebenen überragen.

Die Festsiellung, ob die Kontur von bereits abgebildeten Schnittebenen überragt wird, kann .leicht im Rechner überprüft werden, da lediglich ein Vergleich der Koordinatenwerte stattfinden muß, und zwar unter Berücksichtigung des aktuellen perspektivischen Versatzes.

Das in Figur 4 gezeigte einfache Schnittbeispiel soll dies verständlicher machen: Ein Polygon Yo der ersten Schnittebene ist abgebildet. Es hat in X-Richtung die Breite X und in Z-Richtung die Höhe Z. Um den Gegenstand räumlich erscheinen zu lassen, soll das Polygon Y1 der zweiten Schnittebene um zwei Bildpunkte entsprechend dem Rasterbildschirm in X-/ und Z-Richtung versetzt dargestellt werden.

Da der Gegenstand an der Stelle der zweiten Schnittebene noch immer die Breite X und die Höhe Z hat, muß gemäß der Erfindung die Darstellung so erfolgen, daß der perspektivische Versatz P bei der Berechnung und Darstellung berücksichtigt werden. Die obere Kante des zweiten Polygons Y1 weist also die Koordinaten Z+P also Höhe auf, ist damit größer als die Höhe Z des ersten Polygons Yo und muß demnach dargestellt werden. Die rechte Kante des zweiten Polygons Y1 hat die Koordinate X+P als Breite, ist somit größer als X und wird dargestellt.

Die linke Kante des Polygons Y1 wird soweit dargestellt, wie ihre Höhe Z+P größer ist als die Höhe Z des Polygons Yo der ersten Schnittebene, also um den Betrag des perspektivischen Versatzes P. Genauso verhält es sich mit der Darstellung der unteren Kante des Polygons Y1.

Diese einfache Ermittlungs der darzustellenden Kanten der einzelnen Polygone macht das erfindungsgemäße Verfahren so schnell und so leicht durchführbar, daß es auch auf verhältnismäßig einfachem Mikroprozessorsystemen durchgeführt werden kann.

Die Ermittlung der Datenstruktur für das bearbeitete Werkstück kann dabei auf vielfältige Weise erfolgen und ist nicht Gegenstand der Erfindung.

## Patentanspruch

Numerische Steuerung für eine Werkzeugmaschine, mit einem ein Programm mit Daten und Befehlen für die Bearbeitung eines Werkstücks speichernden Speicher, einer die Werkzeugmaschine abhängig von dem gespeicherten Programm steuernden Programmsteuerung, einem abhängig vom gespeicherten Programm steuerbaren Grafikprozessor und einem Monitor zur Sichtdarstellung der von dem Grafikprozessor gelieferten Informationen, dadurch gekennzeichnet, daß die Programmsteuerung abhängig von den gespeicherten Daten und Befehlen Koordinatendaten für die Konturen einer Vielzahl Querschnitte durch das entsprechend den Daten und Befehlen bearbeite Werkstück erzeugt und in dem Speicher speicher, wobei die Querschnitte zueinander und zu einer durch zwei Koordinatenachsen festgelegten Koordinatenebene eines dreidimensionalen Koordinatensystems parallel verlaufen und daß der Grkfikprozessor die Konturen der Querschnitte zur Erzeugung einer perspektivischen Darstellung des entsprechend dem Programm bearbeiten Werkstücks auf dem Monitor sukzessive längs der zwei Koordinatenachsen der parallelen Koordinatenebene versetzt und die versetzten Konturen auf dem Monitor darstellt, wenn sie die Konturen der vorausgegangenen versetzten Konturen in Richtung der Koordinatenachsen der parallelen Koordinatenebene überragen.

## Revendication

Commande numérique pour une machine-outil, comprenant une mémoire mémorisant un programme avec des donées et des instructions pour l'usinage d'une pièce, une commande par programme commandant la machine-outil en fonction du programme mémorisé, un processeur graphique pouvant être commandé en fonction du programme mémorisé, et un moniteur pour la visualisation des informations fournies par le processeur graphique, caractérisée par le fait que la commande par programme génère, en fonction des données et instructions mémorisées, des coordonnées pour les contours d'une multitude de coupes à travers la pièce usinée suivant les données et instructions et les mémorise dans la mémoire, les coupes étant parallèles les unes aux autres et à un plan de coordonnées, défini par deux axes de coordonnées, d'un système de coordonnées tridimensionnel et que le processeur graphique décale les contours des coupes, en vue d'une représentation en perspective sur le moniteur de la pièce usinée suivant le programme sur l'écran, successivement le long des deux axes de coordonnées du plan de coordonnées parallèle et représente sur l'écran les contours décalés, lorsqu'ils dépassent les contours des contour décalés précédents dans la direction des axes de coordonnées du plan de coordonnées parallèle.

## Claim

Numerical control for a machine tool, with a memory storing a program with data and commands for the working of a workpiece, a program control controlling the machine tool in dependence on the stored program, a graphics processor controllable in dependence on the stored program and a monitor for visual display of the information supplied by the graphics processor, characterized in that, in dependence on the stored data and commands, the program control generates and stores in the memory coordinate data for the contours of a plurality of cross-sections through the workpiece worked in accordance with the data and commands, the cross-sections running parallel to each other and to a fixed coordinate plane of a three-dimensional coordinate system, and in that the graphics processor displaces the contours of the cross-sections on the monitor successively, along the two coordinate axes of the parallel coordinate plane to generate a perspective representation of the workpiece worked according to the program, and represents the displaced contours on the monitor when they project beyond the contours of the previous displaced contours in the direction of the coordinate axes of the parallel coordinate plane.

EP 0 151 274 B1

Fig.3

Fig.4

Fig.1

Fig.2

1